(19) **Europäisches Patentamt**

**European Patent Office**

**Office européen des brevets**

(11) **EP 1 276 793 B1**

(12) **EUROPÄISCHE PATENTSCHRIFT**

(45) Veröffentlichungstag und Bekanntmachung des Hinweises auf die Patenterteilung:
**21.09.2005 Patentblatt 2005/38**

(51) Int Cl.⁷: **C08J 5/18**, C08L 67/02, B29D 7/01, B32B 27/18, C08J 3/22

(21) Anmeldenummer: **01902305.0**

(22) Anmeldetag: **11.01.2001**

(86) Internationale Anmeldenummer:
**PCT/EP2001/000277**

(87) Internationale Veröffentlichungsnummer:
**WO 2001/053397 (26.07.2001 Gazette 2001/30)**

(54) **WEISSE, FLAMMHEMMEND AUSGERÜSTETE, ORIENTIERTE FOLIE AUS EINEM KRISTALLISIERBAREN THERMOPLASTEN, VERFAHREN ZU IHRER HERSTELLUNG UND IHRE VERWENDUNG**

WHITE FLAME-PROOFED ORIENTED FILM MADE FROM A CRYSTALLISABLE THERMOPLASTIC, A METHOD FOR PRODUCTION AND THE USE THEREOF

FEUILLE BLANCHE, IGNIFUGEE, ORIENTEE, CONSTITUEE D'UNE MATIERE THERMOPLASTIQUE CRISTALLISABLE, SON PROCEDE DE PRODUCTION ET SON UTILISATION

(84) Benannte Vertragsstaaten:
**DE FR GB IT LU**

(30) Priorität: **20.01.2000 DE 10002157**

(43) Veröffentlichungstag der Anmeldung:
**22.01.2003 Patentblatt 2003/04**

(73) Patentinhaber: **Mitsubishi Polyester Film GmbH 65203 Wiesbaden (DE)**

(72) Erfinder:
• **MURSCHALL, Ursula**
  **55283 Nierstein (DE)**
• **STOPP, Andreas**
  **55218 Ingelheim (DE)**
• **CRASS, Günther**
  **65232 Taunusstein (DE)**
• **KERN, Ulrich**
  **55218 Ingelheim (DE)**

(74) Vertreter: **Schweitzer, Klaus et al Patentanwaltskanzlei Zounek, Industriepark Kalle-Albert, Gebäude H391 Rheingaustrasse 190-196 65174 Wiesbaden (DE)**

(56) Entgegenhaltungen:
**GB-A- 2 344 596**

• **"ADDITIVES" PLASTICS ENGINEERING,SOCIETY OF PLASTICS ENGINEERS,INC. GREENWICH, CONN,US, Bd. 55, Nr. 6, Juni 1999 (1999-06), Seiten 32-38, XP000998046 ISSN: 0091-9578**
• **"FLAMMSCHUTZADDITIVE DER CONSTAB POLYMER-CHEMIE" GUMMI, FASERN, KUNSTSTOFFE. INTERNATIONALE FACHZEITSCHRIFT FUR DIE POLYMER-VERARBEITUNG,GENTNER VERLAG. STUTTGART,DE, Bd. 48, Nr. 10, Oktober 1995 (1995-10), Seiten 695-697, XP000993091 ISSN: 0176-1625**

**Beschreibung**

Die Erfindung betrifft eine weiße, flammhemmend ausgerüstete, orientierte Folie aus einem Thermoplasten, deren Dicke im Bereich von 5 μm bis 300 μm liegt. Die Folie enthält mindestens ein Weißpigment, ein Flammschutzmittel und zeichnet sich durch sehr gute optische und mechanische Eigenschaften sowie durch eine gute Verstreckbarkeit und eine wirtschaftliche Herstellung aus. Die Erfindung betrifft femer ein Verfahren zur Herstellung dieser Folie und ihre Verwendung.

Weiße Folien aus kristallisierbaren Thermoplasten mit einer Dicke zwischen 5 μm und 300 μm sind hinreichend bekannt.

Diese Folien sind nicht flammhemmend ausgerüstet, so dass sich weder die Folien noch die daraus hergestellten Artikel für Anwendungen eignen, wo ein Brandschutz bzw. eine Schwerentflammbarkeit gefordert sind.

In der DE-A 2 346 787 ist ein schwerentflammbarer Rohstoff beschrieben. Neben dem Rohstoff ist auch die Verwendung des Rohstoffs zur Herstellung von transparenten Folien und Fasern beschrieben.

Bei der Herstellung von Folien mit dem dort beschriebenen phospholanmodifizierten Rohstoff zeigten sich folgende Defizite:

Der Rohstoff ist sehr hydrolyseempfindlich und muß sehr gut vorgetrocknet werden. Beim Trocknen des Rohstoffes mit Trocknern, die dem Stand der Technik entsprechen, verklebt der Rohstoff, so daß nur unter schwierigsten Bedingungen eine Folie herstellbar ist.

Die unter extremen, unwirtschaftlichen Bedingungen hergestellten Folien verspröden bei Temperaturbelastungen, d. h. die mechanischen Eigenschaften gehen aufgrund der Versprödung stark zurück, so dass die Folie unbrauchbar ist. Bereits nach 48 Stunden Temperaturbelastung tritt diese Versprödung auf.

Aufgabe der vorliegenden Erfindung wares, eine weiße, flammhemmend ausgerüstete, orientierte Folie mit einer Dicke von 5 - 300 μm bereitzustellen, die neben einer wirtschaftlichen Herstellung, einer guten Verstreckbarkeit, guten mechanischen sowie optischen Eigenschaften, vor allem eine flammhemmende Wirkung und keine Versprödung nach Temperaturbelastung aufweist.

Eine flammhemmende Wirkung bedeutet, dass die weiße Folie in einer sogenannten Brandschutzprüfung die Bedingungen nach DIN 4102 Teil 2 und insbesondere die Bedingungen nach DIN 4102 Teil 1 erfüllt und in die Baustoffklasse B 2 und insbesondere B1 der schwer entflammbaren Stoffe eingeordnet werden kann.

Des Weiteren soll die Folie den UL-Test 94 "Vertical Burning Test for Flammability of P lastic Material" bestehen, so dass sie in die Klasse 94 VTM-O eingestuft werden kann. Das bedeutet, dass die Folie 10 Sekunden nach Wegnahme des Bunsenbrenners nicht mehr brennt, nach 30 Sekunden kein Glühen beobachtet wird und auch kein Abtropfen festgestellt wird.

Zu den guten optischen Eigenschaften zählt beispielsweise eine homogene Einfärbung, ein hoher Oberflächenglanz (> 15), eine niedrige Lichttransmission (< 70%) sowie eine im Vergleich zur nicht flammschutzausgerüsteten Folie unveränderte Gelbwert.

Zu den guten mechanischen Eigenschaften zählt unter anderem eine hoher E-Modul ($E_{MD}$ > 3200 N/mm$^2$; $E_{TD}$ > 3500 N/mm$^2$) sowie gute Reißfestigkeitswerte (in MD > 100 N/mm$^2$; in TD > 130 N/mm$^2$).

Zu der guten Verstreckbarkeit zählt, dass sich die Folie bei ihrer Herstellung sowohl in Längs- als auch in Querrichtung hervorragend und ohne Abrisse orientieren läßt.

Zu der wirtschaftlichen Herstellung zählt, dass die Rohstoffe bzw. die Rohstoffkomponenten, die zur Herstellung der schwer entflammbaren Folie benötigt werden, mit handelsüblichen industrietrocknern, wie Vakuumtrockner, Wirbelschichttrockner, Fließbetttrockner oder Festbetttrockner (Schachttrockner), getrocknet werden können. Wesentlich ist, dass die Rohstoffe nicht verkleben und nicht thermisch abgebaut werden. Die genannten Trocknerarbeiten bei Temperaturen zwischen 100 und 170 °C, wo die flammhemmend ausgerüsteten Rohstoffe verkleben und die Trockner bzw. Extruder so zusetzen, dass die verkohlte Masse herausgebrochen werden muß, so dass keine Folienherstellung möglich ist.

Bei dem am schonensten trocknenden Vakuumtrockner durchläuft der Rohstoff einen Temperaturbereich von ca. 30 °C bis 130 °C bei einem Vakuum von 50 mbar. Danach ist ein sog. Nachtrocknen in einem Hopper bei Temperaturen von 100 - 130 °C und einer Verweilzeit von 3 bis 6 Stunden erforderlich. Selbst hier verkleben die nach dem Stand der Technik hergestellten flammhemmend ausgerüsteten Rohstoffe extrem.

Keine Versprödungen bei kurzer Temperaturbelastung bedeutet, dass die Folie nach 100 Stunden Tempervorgang bei 100 °C in einem Umluftofen keine Versprödung und keine schlechten mechanischen Eigenschaften aufweist.

Die erfindungsgemäße weiße Folie enthält als Hauptbestandteil einen kristallisierbaren Thermoplasten. Geeignete kristallisierbare bzw. teilkristalline Thermoplasten sind beispielsweise Polyethylenterephthalat, Polybutylenterephthalat, Polyethylennaphthalat, wobei Polyethylenterephthalat bevorzugt ist.

Erfindungsgemäß versteht man unter kristallisierbaren Thermoplasten kristallisierbare Homopolymere, kristallisierbare Copolymere, kristallisierbare Compounds (Mischungen), kristallisierbares Rezyklat und andere Variationen von kristallisierbaren Thermoplasten.

Die weiße Folie kann sowohl einschichtig als auch mehrschichtig sein. Die weiße Folie kann ebenfalls mit diversen Beschichtungsmitteln wie Copolyestern oder Haftvermittlern beschichtet sein.

Die weiße Folie enthält mindestens ein Flammschutzmittel und zwecks homogener Einfärbung mindestens ein Weißpigment, zwecks homogener Einfärbung.

Das Weißpigment wir ebenfalls bevorzugt über die Masterbatch-Technologie zudosiert, kann aber auch direkt beim Rohstoffhersteller eingearbeitet werden. Die Konzentration des Weißpigments liegt zwischen 0,2 Gew.-% und 40 Gew.-%, vorzugsweise zwischen 0,5 Gew.-% und 25 Gew.-%, bezogen auf das Gewicht des kristallisierbaren Thermoplasten.

Geeignete Weißpigmente sind vorzugsweise Titandioxid, Bariumsulfat, Calciumcarbonat, Kaolin, Siliciumdioxid, wobei Titandioxid und Bariumsulfat bevorzugt sind.

Die Titandioxidteilchen können aus Anatas oder Rutil bestehen, vorzugsweise überwiegend aus Rutil, welcher im Vergleich zu Anatas eine höhere Deckkraft zeigt. In bevorzugter Ausführungsform bestehen die Titandioxidteilchen zu mindestens 95Gew.% aus Rutil. Sie können nach einem üblichen Verfahren, z. B. nach dem Chlorid- oder dem Sulfat-Prozeß, hergestellt werden. Ihre Menge in der Basisschicht beträgt 0,3 - 25 Gew.-%, bezogen auf die Basisschicht, die mittlere Teilchengröße ist relativ klein und liegt vorzugsweise im Bereich von 0,10 bis 0,30 μm.

Durch Titandioxid der beschriebenen Art entstehen innerhalb der Polymermatrix keine Vakuolen während der Folienherstellung.

Die Titandioxidteilchen können einen Überzug aus anorganischen Oxiden besitzen, wie er üblicherweise als Überzug für $TiO_2$-Weißpigment in Papieren oder Anstrichmitteln zur Verbesserung der Lichtechtheit eingesetzt wird.

$TiO_2$ ist bekanntlich fotoaktiv. Bei Einwirkung von W-Strahlen bilden sich freie Radikale auf der Oberfläche der Partikel. Diese freien Radikale können zu den filmbildenden Polymeren wandern, was zu Abbaureaktionen und Vergilbung führt. Zu den besonders geeigneten Oxiden gehören die Oxide von Aluminium, Silicium, Zink oder Magnesium oder Mischungen aus zwei oder mehreren dieser Verbindungen. $TiO_2$-Partikel mit einem Überzug aus mehreren dieser Verbindungen werden z. B. in der EP-A-0 044 515 und EP-A-0 078 633 beschrieben. Weiterhin kann der Überzug organische Verbindungen mit polaren und unpolaren Gruppen enthalten. Die organischen Verbindungen müssen bei der Herstellung der Folie durch Extrusion der Polymerschmelze ausreichend thermostabil sein. Polare Gruppen sind beispielsweise -OH; -OR; -COOX; (X = R, H oder Na, R = Alkyl mit 1 - 34 C-Atomen). Bevorzugte organische Verbindungen sind Alkanole und Fettsäuren mit 8 - 30 C-Atomen in der Alkylgruppe, insbesondere Fettsäuren und primäre n-Alkanole mit 12 - 24 C-Atomen, sowie Polydiorganosiloxane und/oder Polyorganhydrogensiloxane wie z. B. Polydimethylsiloxan und Polymethylhydrogensiloxan.

Der Überzug der Titandioxidteilchen besteht gewöhnlich aus 1 bis 12, insbesondere 2 bis 6g anorganischer Oxide und 0,5 bis 3, insbesondere 0,7 bis 1,5 g organischer Verbindung, bezogen auf 100g Titandioxidteilchen. Der Überzug wird auf die Teilchen in wässriger Suspension aufgebracht. Die anorganischen Oxide werden aus wasserlöslichen Verbindungen, z. B. Alkali-, insbesondere Natriumnitrat, Natriumsilikat (Wasserglas) oder Kieselsäure in der wässrigen Suspension ausgefällt.

Unter anorganischen Oxiden wie $Al_2O_3$ oder $SiO_2$ sind auch die Hydroxide oder deren verschiedene Entwässerungsstufen wie z. B. Oxidhydrat zu verstehen, ohne dass man deren genaue Zusammensetzung und Struktur erkennt. Auf das $TiO_2$-Pigment werden nach dem Glühen und Mahlen in wässriger Suspension die Oxidhydrate z. B. des Aluminiums und/oder Siliciums gefällt, die Pigmente dann gewaschen und getrocknet. Diese Ausfällung kann somit direkt in einer Suspension geschehen, wie sie im Herstellungsprozess nach der Glühung und der sich anschließenden Naßmahlung anfällt. Die Ausfällung der Oxide und/oder Oxidhydrate der jeweiligen Metalle erfolgt aus den wasserlöslichen Metallsalzen im bekannten pH-Bereich, für das Aluminium wird beispielsweise Aluminiumsulfat in wässriger Lösung (pH kleiner 4) eingesetzt und durch Zugabe von wässriger Ammoniaklösung oder Natronlauge im pH-Bereich zwischen 5 und 9, vorzugsweise zwischen 7 und 8,5, das Oxidhydrat gefällt. Geht man von einer Wasserglas- oder Alkalialuminatlösung aus, sollte der pH-Wert der vorgelegten $TiO_2$-Suspension im stark alkalischen Bereich (pH größer 8) liegen. Die Ausfällung erfolgt dann durch Zugabe von Mineralsäure wie Schwefelsäure im pH-Bereich 5 bis 8. Nach der Ausfällung der Metalloxide wird die Suspension noch 15 min bis etwa 2 Stunden gerührt, wobei die ausgefällten Schichten eine Alterung erfahren. Das beschichtete Produkt wird von der wässrigen Dispersion abgetrennt und nach dem Waschen bei erhöhter Temperatur, insbesondere bei 70 bis 100 °C, getrocknet.

Die Folie gemäß der Erfindung enthält mindestens ein Flammschutzmittel, das über die sogenannte Masterbatch-Technologie direkt bei der Folienherstellung zudosiert wird, wobei die Konzentration des Flammschutzmittels im Bereich von 0,5 bis 30,0 Gew.-%, vorzugsweise von 1,0 bis 20,0 Gew.-%, bezogen auf das Gewicht der Schicht des kristallisierbaren Thermoplasten, liegt. Bei der Herstellung des Masterbatchs wird im allgemeinen ein Verhältnis von Flammschutzmittel zu Thermoplast im Bereich von 60 zu 40 Gew.-% bis 10 zu 90 Gew.-% eingehalten.

Zu den typischen Flammschutzmitteln gehören Bromverbindungen, Chlorparaffine und andere Chlorverbindungen, Antimontrioxid, Aluminiumtrihydrate, wobei die Halogenverbindungen aufgrund der entstehenden halogenhaltigen Nebenprodukte nachteilig sind. Des Weiteren ist die geringe Lichtbeständigkeit einer damit ausgerüsteten Folie neben der Entwicklung von Halogenwasserstoffen im Brandfall extrem nachteilig.

Geeignete Flammschutzmittel, die gemäß der Erfindung eingesetzt werden, sind beispielsweise organische Phosphorverbindungen wie Carboxyphosphinsäuren, deren Anhydride und Dimethyl-methylphosphonat. Erfindungswesentlich ist, dass die organische Phosphorverbindung im Thermoplast löslich ist, da andernfalls die geforderten optischen Eigenschaften nicht erfüllt werden.

Da die Flammschutzmittel im allgemeinen eine gewisse Hydrolyseempfindlichkeit aufweisen, kann der zusätzliche Einsatz eines Hydrolysestabilisators sinnvoll sein.

Als Hydrolysestabilisator werden im allgemeinen phenolische Stabilisatoren, Alkali/Erdalkalistearate und/ oder Alkali-/Erdalkalicarbonate in Mengen von 0,01 bis 1,0 Gew.% eingesetzt. Phenolische Stabilisatoren werden in einer Menge von 0,05 bis 0,6 Gew.%, insbesondere 0,15 bis 0,3 Gew.-% und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertärbutyl-4-Hydroxybenzyl)benzol sind besonders vorteilhaft.

In einer besonders bevorzugten Ausführungsform enthält die erfindungsgemäße Folie als Hauptbestandteil ein kristallisierbares Polyethylenterephthalat, 1 Gew.-% bis 20 Gew.-% einer im Polyethylenterephthalat löslichen organischen Phosphorverbindung (Dimethyl-Methylphosphonat) als Flammschutzmittel sowie 0,5 Gew.-% bis 25 Gew.-% Titandioxid mit einem Teilchendurchmesser von vorzugsweise 0,10 bis 0,50 μm, wobei ein Titandioxid vom Rutil-Typ bevorzugt wird. Anstelle von Titandioxid kann auch Bariumsulfat mit einem Teilchendurchmesser von 0,20 bis 1,20 μm als Weißpigment eingesetzt werden, wobei die Konzentration zwischen 1,0Gew.% und 25 Gew.-% liegt. In einer bevorzugten Ausführungsform können auch Mischungen dieser Weißpigmente oder eine Mischung von einem dieser Weißpigmente mit einem anderen eingesetzt werden.

Die Standardviskosität SV (DCE) des Polyethylenterephthalates, gemessen in Dichloressigsäure nach DIN 53728, liegt zwischen 600 und 1000, vorzugsweise zwischen 700 und 900.

Die weiße Polyethylenterephthalat-Folie, die mindestens ein Flammschutzmittel und ein Weißpigment enthält, kann sowohl einschichtig als auch mehrschichtig sein. In der mehrschichtigen Ausführungsform ist die Folie aus mindestes einer Kernschicht und mindestens einer Deckschicht aufgebaut, wobei insbesondere ein dreischichtiger A-B-A oder A-B-C Aufbau bevorzugt ist. Für diese Ausführungsform ist es wesentlich, dass das Polyethylenterephthalat der Kemschicht eine ähnliche Standardviskosität besitzt, wie das Polyethylenterephthalat der Deckschicht (en), die an die Kernschicht angrenzt (angrenzen).

In einer besonderen Ausführungsform können die Deckschichten auch aus einem Polyethylennaphthalat - Homopolymeren oder aus Polyethylentherephtalat-Polyethylennaphthalat Copolymeren oder Compound bestehen. In dieser Ausführungsform haben die Thermoplaste derDeckschichten ebenfalls ähnliche Standardviskositäten wie das Polyethylentherephthalat der Kernschicht.

In der mehrschichtigen Ausführungsform ist der Flammschutz und das Weißpigment vorzugsweise in der Kernschicht enthalten. Jedoch können nach Bedarf auch die Deckschichten mit Flammschutzmittel und Weißpigment ausgerüstet sein.

Anders als in der einschichtigen Ausführungsform bezieht sich hier die Konzentration des Flammschutzmittels und des Weißpigmentes auf das Gewicht der Thermoplasten in der ausgerüsteten Schicht.

Ganz überraschend haben Brandschutzversuche nach DIN 4102 und dem UL-Test gezeigt, dass es im Falle einer dreischichtigen Folie durchaus ausreichend ist, die 0,5 bis 2 μm dicken Deckschichten mit Flammschutzmittel auszurüsten, um eine verbesserte Flammhemmung zu erreichen. Bei Bedarf und bei hohen Brandschutzanforderungen kann auch die Kernschicht mit Flammschutzmittel ausgerüstet sein, d. h. eine sogenannte Grundausrüstung beinhalten.

Dadurch werden die mit der bekannten Koextrusionstechnologie hergestellten schwer entflammbaren, mehrschichtigen Folien im Vergleich zu den komplett in hohen Konzentrationen ausgerüsteten Monofolien wirtschaftlich interessant, da deutlich weniger Flammschutzmittel benötigt wird.

Die Folie kann auch mindestens einseitig mit einer kratzfesten Beschichtung, mit einem Copolyester oder mit einem Haftvermittler versehen sein.

Bei der Herstellung der Folie wurde festgestellt, dass sich mittels Masterbatch-Technologie und einer geeigneten Vortrocknung bzw. Vorkristallisation des Masterbatches die schwerentflammbare Folie ohne Verklebung im Trockner herstellen läßt. Des Weiteren wurden keine Ausgasungen und Ablagerungen im Produktionsprozess gefunden.

Darüber hinaus ergaben Messungen, dass die erfindungsgemäße Folie bei Temperaturbelastungen von 100 °C über einen längeren Zeitraum nicht versprödet, was mehr als überraschend ist. Dieses Resultat ist auf die synergistische Wirkung von geeigneter Vorkristallisation, Vortrocknung und Masterbatch-Technologie zurückzuführen.

Der Oberflächenglanz, gemessen nach DIN 67530 (Messwinkel 20°) ist größer als 15, vorzugsweise größer als 20. Die Lichttransmission (Transparenz), gemessen nach ASTM D 1003, ist kleiner als 70 %, vorzugsweise kleiner als 60 %. Die Einfärbung ist homogen und streifenfrei über die Lauflänge und die Folienbreite.

Der E-Modul (ISO 527-1-2) in Längsrichtung liegt bei größer 3200 N/mm$^2$, vorzugsweise bei größer 3600 N/

mm$^2$. Der E-Modul (ISO 527-1-2) in Querrichtung liegt bei größer 3500 N/mm$^2$, vorzugsweise bei größer 3800 N/mm$^2$.

Des Weiteren ist die erfindungsgemäße Folie ohne Umweltbelastung und ohne Verlust der mechanischen Eigenschaften problemlos rezyklierbar, wodurch sie sich beispielsweise für die Verwendung als kurzlebige Werbeschilder, beim Messebau und für andere Werbeartikel, wo Brandschutz gewünscht wird geeignet.

Überraschenderweise erfüllen schon erfindungsgemäße Folien im Dickenbereich 5 - 300 µm die Baustoffklassen B2 und B1 nach DIN 4102 und dem UL-Test 94.

Die Herstellung der erfindungsgemäßen, transparenten, schwer entflammbaren Folie kann beispielsweise nach dem Extrusionsverfahren in einer Extrusionsstraße erfolgen.

Erfindungsgemäß wird das Flammschutzmittel über die Masterbatch-Technologie zugegeben. Das Flammschutzmittel wird in einem Trägermaterial voll dispergiert. Als Trägermaterial kommen der Thermoplast selbst, wie z. B. das Polyethylenterephthalat oder auch andere Polymere, die mit dem Thermoplasten verträglich sind, in Frage.

Bevorzugt bei der Masterbatch-Technologie ist, dass die Komgröße und das Schüttgewicht des Masterbatches ähnlich der Korngröße und dem Schüttgewicht des Thermoplasten ist, so dass eine homogene Verteilung und damit eine homogene Schwerentflammbarkeit entstehen kann.

Die Polyesterfolien können nach bekannten Verfahren aus einem Polyesterrohstoff mit ggf. weiteren Rohstoffen, dem Weißpigment und dem Flammschutzmittel und/oder weiteren üblichen Additiven in üblicher Menge von 0,1 bis max. 30 Gew.-% sowohl als Monofolie als auch als mehrschichtige, ggf. koextrudierte Folien mit gleichen oder unterschiedlich ausgebildeten Oberflächen hergestellt werden, wobei eine Oberfläche beispielsweise pigmentiert ist und die andere Oberfläche kein Pigment enthält. Ebenso können eine oder beide Oberflächen der Folie nach bekannten Verfahren mit einer üblichen funktionalen Beschichtung versehen werden.

Erfindungswesentlich ist, dass das Masterbatch, welches das Flammschutzmittel und gegebenenfalls den Hydrolysestabilisator enthält, vorkristallisiert bzw. vorgetrocknet wird. Diese Vortrocknung beinhaltet ein gradielles Erhitzen des Masterbatches unter reduziertem Druck (20 bis 80 mbar, vorzugsweise 30 bis 60 mbar, insbesondere 40 bis 50 mbar) und unter Rühren und gegebenenfalls ein Nachtrocknen bei konstanter, erhöhter Temperatur ebenfalls unter reduziertem Druck. Das Masterbatch wird vorzugsweise bei Raumtemperatur aus einem Dosierbehälter in der gewünschten Abmischung zusammen mit den Polymeren der Basis- und/oder Deckschichten und ggf. anderen Rohstoffkomponenten chargenweise in einem Vakuumtrockner, der im Läufe der Trocken- bzw. Verweilzeit ein Temperaturspektrum von 10 °C bis 160 °C, vorzugsweise 20 °C bis 150 °C, insbesondere 30 °C bis 130 °C durchläuft, gefüllt. Während der ca. 6-stündigen, vorzugsweise 5-stündigen, insbesondere 4-stündigen Verweilzeit wird die Rohstoffmischung mit 10 bis 70 Upm, vorzugsweise 15 bis 65 Upm, insbesondere 20 bis 60 Upm gerührt. Das so vorkristallisierte bzw. vorgetrocknete Rohstoffgemisch wird in einem nachgeschalteten ebenfalls evakuierten Behälter bei 90 bis 180 °C, vorzugsweise 100 °C bis 170 °C, insbesondere 110 °C bis 160 °C für 2 bis 8 Stunden, vorzugsweise 3 bis 7 Stunden, insbesondere 4 bis 6 Stunden nachgetrocknet.

Bei dem bevorzugtem Extrusionsverfahren zur Herstellung der Polyesterfolie wird das aufgeschmolzene Polyestermaterial durch eine Schlitzdüse extrudiert und als weitgehend amorphe Vorfolie auf einer Kühlwalze abgeschreckt. Diese Folie wird anschließend erneut erhitzt und in Längs- und Querrichtung bzw. in Quer- und Längsrichtung bzw. in Längs-, in Quer- und nochmals und Längsrichtung und/oder Querrichtung gestreckt. Die Strecktemperaturen liegen im allgemeinen bei $T_G$ + 10 °C bis $T_G$ + 60 °C ($T_G$ = Glastemperatur), das Streckverhältnis der Längsstreckung liegt üblicherweise bei 2 bis 6, insbesondere bei 3 bis 4,5, das der Querstreckung liegt bei 2 bis 5, insbesondere bei 3 bis 4,5 und das der ggf. durchgeführten zweiten Längs- und Querstreckung liegt bei 1,1 bis 5. Die erste Längsstreckung kann ggf. gleichzeitig mit der Querstreckung (Simultanstreckung) durchgeführt werden. Anschließend folgt die Thermofixierung der Folie bei Ofentemperaturen von 180 bis 260 °C, insbesondere bei 220 bis 250 °C. Anschließend wird die Folie abgekühlt und gewickelt.

Es war mehr als überraschend, dass mittels Masterbatch-Technologie und einer speziellen Vortrocknung bzw. Vorkristallisation eine schwerentflammbare Folie mit dem geforderten Eigenschaftsprofil wirtschaftlich und ohne Verklebung im Trockner herstellbar ist und dass die Folie nach Temperaturbelastung nicht versprödet.

Sehr überraschend war ebenfalls, dass bei diesem hervorragenden Resultat und dem geforderten Flammschutz der Gelbwert der Folie im Vergleich zu einer nicht mit Flammschutzmittel ausgerüsteten Folie im Rahmen der Meßgenauigkeit nicht negativ beeinflusst ist;

- es wurden keine Ausgasungen, keine Düsenablagerungen, keine Rahmenausdampfungen beobachtet, wodurch die Folie eine exzellente Optik aufweist und ein ausgezeichnetes Profil und eine hervorragende Planlage hat;

- die erfindungsgemäße schwerentflammbare Folie zeichnet sich durch eine hervorragende Streckbarkeit aus, so dass sie verfahrenssicher und stabil auf high speed film lines bis zu Geschwindigkeiten von 420m/min produktionssicher hergestellt werden kann.

Damit ist eine solche Folie auch wirtschaftlich rentabel.

Des Weiteren ist sehr überraschend, dass auch das Regenerat (Rezyklat) wieder einsetzbar ist, ohne den Gelbwert der Folie negativ zu beeinflussen.

Durch die überraschende Kombination ausgezeichneter Eigenschaften eignet sich die erfindungsgemäße Folie hervorragend für eine Vielzahl verschiedener Anwendungen, beispielsweise für Innenraumverkleidungen, für Messebau und Messeartikel, als Displays, für Schilder, für Schutzausrüstung von Maschinen und Fahrzeugen, im Beleuchtungssektor, im Laden- und Regalbau, als Werbeartikel, Kaschiermedium, für Gewächshäuser, Überdachungen, Außenverkleidungen, Abdeckungen, Anwendungen im Bausektor und Lichtwerbeprofile, Schattenmatten, Elektroanwendungen.

Die Erfindung wird im folgenden anhand von Ausführungsbeispielen näher erläutert.

Die Messungen der einzelnen Eigenschaften erfolgt dabei gemäß der folgenden Normen bzw. Verfahren.

**Meßmethoden**

**Oberflächenglanz**

Der Oberflächenglanz wird bei einem Messwinkel von 20° nach DIN 67530 gemessen.

**Lichttransmission**

Unter der Lichttransmission ist das Verhältnis des insgesamt durchgelassenen Lichtes zur einfallenden Lichtmenge zu verstehen.

Die Lichttransmission wird mit dem Messgerät "®HAZEGARD plus" nach ASTM D 1003 gemessen.

**Trübung**

Trübung ist der prozentuale Anteil des durchgelassenen Lichtes, der vom eingestrahlten Lichtbündel im Mittel um mehr als 2,5° abweicht. Die Bildschärfe wird unter einem Winkel kleiner 2,5° ermittelt.

Die Trübung wird mit dem Messgerät "HAZEGARD plus" nach ASTM D 1003

**Oberflächendefekte**

Die Oberflächendefekte werden visuell bestimmt.

**Mechanische Eigenschaften**

Der E-Modul und die Reißfestigkeit werden in Längs- und Querrichtung nach ISO 527-1-2 gemessen.

**SV (DCE), IV (DVE)**

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV\ (DCE) = 6{,}67 \cdot 10^{-4}\ SV\ (DCE) + 0{,}118$$

**Brandverhalten**

Das Brandverhalten wird nach DIN 4102 Teil 2, Baustoffklasse B2 und nach DIN 4102 Teil 1, Baustoffklasse B1 sowie nach dem UL-Test 94 ermittelt.

**Beispiel 1**

Es wird eine 50 μm dicke, weiße Monofolie hergestellt, die als Hauptbestandteil Polyethylenterephthalat (PET), 7,0 Gew.-% Titandioxid und 4 Gew.-% Flammschutzmittel enthält.

Das Titandioxid ist vom Rutiltyp, hat einen mittleren Teilchendurchmesser von 0,20 μm und ist mit $Al_2O_3$ gecoatet.

Bei dem Flammschutzmittel handelt es sich um die organische, im PET lösliche Phosphorverbindung Dimethyl-Methylphosphonat (® Amgard P1045 Fa. Albright & Wilson)

Zwecks homogener Verteilung wird das Titandioxid direkt beim Rohstoffhersteller in das PET eingearbeitet.

Das Flammschutzmittel wird in Form eines Maserbatches zudosiert. Das Masterbatch setzt sich aus 20 Gew.-% Flammschutzmittel und 80 Gew.-% PET zusammen und hat ein Schüttgewicht von 750kg/m$^3$.

Das PET, aus dem die Folie hergestellt wird und das PET, das zur Masterbatchherstellung benutzt werden, haben eine Standardviskosität SV (DCE) von 810, was einer intrinsischen Viskosität IV (DCE) von 0,658 dl/g entspricht.

50 Gew.-% des Polyethylenterephthalates, 30 Gew.-% Polyethylenterephthalat-Rezyklat und 20 Gew.-% des Masterbatches werden bei Raumtemperatur aus separaten Dosierbehältern in einem Vakuumtrockner gefüllt, der von dem Einfüllzeitpunkt bis zum Ende der Verweilzeit ein Temperaturspektrum von 25 °C bis 130 °C durchläuft. Während der ca. 4-stündigen Verweilzeit wird das Rohstoffgemisch mit 61 Upm gerührt.

Das vorkristallisierte bzw. vorgetrocknete Rohstoffgemisch wird in dem nachgeschalteten, ebenfalls unter Vakuum stehenden Hopper bei 140 °C 4 Stunden nachgetrocknet. Anschließend wird mit dem beschriebenen Extrusionsverfahren die 50 µm Monofolie hergestellt.

Die einzelnen Verfahrensschritte waren:

| Längsstreckung | Temperatur | 85-135 °C |
|---|---|---|
| | Längsstreckverhältnis | 4,0: 1 |
| Querstreckung | Temperatur | 85-135 °C |
| | Querstreckverhältnis | 4,0 : 1 |
| Fixierung | Temperatur | 230 °C |

Die hergestellte transparente PET-Folie hat folgendes Eigenschaftsprofil:

| Dicke | 50 µm |
|---|---|
| Oberflächenglanz 1. Seite | 72 |
| (Messwinkel 20°) 2. Seite | 68 |
| Lichtransmission | 28 % |
| Oberflächendefekte pro m$^2$ | keine |
| E-Modul längs | 4300 N/mm$^2$ |
| E-Modul quer | 5600 N/mm$^2$ |
| Reißfestigkeit längs | 190 N/mm$^2$ |
| Reißfestigkeit quer | 280 N/mm$^2$ |
| Reißdehnung längs | 170 % |
| Reißdehnung quer | 85 % |
| Gelbwert (YID) | 48 |
| Einfärbung | homogen |

Die Folie erfüllt nach DIN 4102 Teil 2 und Teil 1 die Baustoffklassen B2 und B1. Die Folie besteht den UL-Test 94.

Nach 200 Stunden tempern bei 100 °C im Umlufttrocknerschrank sind die mechanischen Eigenschaften unverändert. Die Folie zeigt keinerlei Versprödungserscheinungen.

**Beispiel 2**

Nach der Koextrusionstechnologie wird eine 17 µm dicke mehrschichtige PET-Folie mit der Schichtreihenfolge A-B-A hergestellt, wobei B die Kernschicht und A die Deckschichten repräsentieren. Die Kernschicht ist 15 µm dick und die beiden Deckschichten, die die Kernschicht überziehen, sind jeweils 1 µm dick.

Das für die Kernschicht B eingesetzte Polyethylenterephthalat ist identisch mit dem aus Beispiel 1, enthält also 1 Gew.-% Titandioxid.

Die Kemschicht enthält außerdem 5 Gew.-% Flammschutzmittel, wobei das Flammschutzmittel in Form eines Masterbatches zudosiert wird. Das Masterbatch setzt sich aus 25 Gew.-% Flammschutzmittel und 75 Gew.-% PET zusammen.

Das PET der Deckschicht hat eine Standardviskosität SV(DCE) von 810 und ist mit 0,3 Gew.-% Sylobloc ausgerüstet. Die Deckschichten enthalten kein Titandioxid und kein Flammschutzmittel.

Für die Kernschicht werden 50 Gew.-% Polyethylenterephthalat, 30 Gew.-% Polyethylenterephthalat-Rezyklat und 20 Gew-% des Masterbatches entsprechend Beispiel 1 vorkristallisiert, vorgetrocknet und nachgetrocknet.

Der Deckschichtrohstoff erfährt keine besondere Trocknung. Mittels Koextrusionstechnologie wird eine 17 μm dicke Folie mit der Schichtreihenfolge A-B-A hergestellt, die folgende Eigenschaften zeigt:

| Schichtaufbau | A-B-A |
|---|---|
| Gesamtdicke | 17 μm |
| Oberflächenglanz 1. Seite | 134 |
| (Messwinkel 20°) 2. Seite | 128 |
| Lichttransmission | 48 % |
| Oberflächendefekte | keine |
| (Stippen, Orangenhaut, Blasen...) | |
| E-Modul längs | 4100 N/mm$^2$ |
| E-Modul quer | 4720 N/mm$^2$ |
| Reißfestigkeit längs | 180 N/mm$^2$ |
| Reißfestigkeit quer | 205 N/mm$^2$ |
| Gelbwert (YID) | 12,9 |
| Einfärbung | homogen |

Nach 200 Stunden Tempern bei 100 °C im Umlufttrocknerschrank sind die mechanischen Eigenschaften unverändert. Die Folie zeigt keinerlei Versprödungserscheinungen.

Die Folie erfüllt nach DIN 4102 Teil 2 und Teil 1 die Baustoffklasse B2 und B1. Die Folie besteht den UL-Test 94.

**Beispiel 3**

Entsprechend Beispiel 2 wird eine 20 μm A-B-A-Folie hergestellt, wobei die Kernschicht B 16 μm und die Deckschichten A jeweils 2 μm dick sind.

Die Kernschicht B enthält nur 5 Gew.-% des Flammschutz-Masterbatches aus Beispiel 2.

Die Deckschichten sind identisch mit denen aus Beispiel 2, enthalten aber 20 Gew.-% des Masterbatches, welches in Beispiel 2 nur für die Kernschicht eingesetzt wurde.

Die Rohstoffe und das Masterbatch für die Kernschicht und die Deckschichten werden entsprechend Beispiel 1 vorkristallisiert, vorgetrocknet und nachgetrocknet.

Die mittels Koextrusionstechnologie hergestellt, mehrschichtige 20 μm Folie hat folgendes Eigenschaftsprofil:

| Schichtaufbau | A-B-A |
|---|---|
| Gesamtdicke | 20 μm |
| Oberflächenglanz 1. Seite | 131 |
| (Messwinkel 20°) 2. Seite | 125 |
| Lichttransmission | 42 % |
| Oberflächendefekte | keine |
| (Stippen, Orangenhaut, Blasen ...) | |
| E-Modul längs | 4000 N/mm$^2$ |
| E-Modul quer | 4700 N/mm$^2$ |
| Reißfestigkeit längs | 180 N/mm$^2$ |
| Reißfestigkeit quer | 205 N/mm$^2$ |
| Gelbwert (YID) | 13,1 |

Nach 200 Stunden Tempem bei 100 °C im Umlufttrocknerschrank sind die mechanischen Eigenschaften unverändert. Die Folie zeigt keinerlei Versprödungserscheinungen.

Die Folie erfüllt nach DIN 4102 Teil 2 und Teil 1 die Baustoffklassen B2 und B1. Die Folie besteht den UL-Test 94.

**Vergleichsbeispiel 1**

Beispiel 2 wird wiederholt. Die Folie wird aber nicht mit Flammschutz-Masterbatch ausgerüstet, d. h. die Folie enthält kein Flammschutzmittel.

Das Eigenschaftsprofil der unausgerüsteten Folie ist mit dem der ausgerüsteten Folie aus Beispiel 2 vergleichbar.

Die unausgerüstete Folie erfüllt die Tests nach DIN 4102 Teil 1 und Teil 2 sowie den UL-Test 94 nicht.

**Vergleichsbeispiel 2**

Es wurde versucht eine Folie herzustellen. In der das Flammschutzmittel ohne Masterbatch-Technologie und damit ohne Vortrocknung eingesetzt wurde.

Es ließ sich keine Folie herstellen, der Rohstoff verklebt im Trockner.

**Patentansprüche**

1. Weiße Polyesterfolie enthaltend mindestens ein Weißpigment und mindestens ein Flammschutzmittel, wobei das Flammschutzmittel im Polyester löslich ist und über die Masterbatch-Technologie direkt bei der Folienherstellung zudosiert wird und wobei das Masterbatch durch gradielles Erhitzen unter reduziertem Druck und unter Rühren vorbehandelt wird.

2. Polyesterfolie nach Anspruch 1, **dadurch gekennzeichnet, daß** sich direkt an das gradielle Erhitzen unter reduziertem Druck und unter Rühren ein Nachtrocknen bei konstanter, erhöhter Temperatur ebenfalls unter reduziertem Druck anschließt.

3. Polyesterfolie nach Anspruch 1 oder 2, **dadurch gekennzeichnet, daß** das Weißpigment ausgewählt wird aus einem oder mehreren Elementen der Gruppe: Titandioxid, Bariumsulfat, Calciumcarbonat, Kaolin und Siliciumdioxid.

4. Polyesterfolie nach Anspruch 3, **dadurch gekennzeichnet, daß** das Weißpigment gecoatet ist.

5. Polyesterfolie nach einem der Ansprüche 1 bis 4, **dadurch gekennzeichnet, daß** das Flammschutzmittel ausgewählt wird aus einer oder mehreren organischen Phosphorverbindungen, vorzugsweise Dimethyl-Methylphosphonat.

6. Polyesterfolie nach einem der Ansprüche 1 bis 5, **dadurch gekennzeichnet, dass** die Folie 0.5 bis 30.0 Gew.-% Flammschutzmittel enthält.

7. Polyesterfolie nach einem der Ansprüche 1 bis 6, **dadurch gekennzeichnet, dass** die Folie 0.2 bis 40.0 Gew.-% Weißpigment enthält.

8. Polyesterfolie nach einem der Ansprüche 1 bis 7, **dadurch gekennzeichnet, daß** die Folie nach 100 Stunden Tempervorgang bei 100 °C keine Versprödung aufweist.

9. Polyesterfolie nach einem der Ansprüche 1 bis 8, **dadurch gekennzeichnet, dass** die Folie eine Mehrschichtfolie, umfassend eine Basisschicht und mindestens eine Deckschicht, ist.

10. Polyesterfolie nach Anspruch 9, **dadurch gekennzeichnet, daß** das Flammschutzmittel in der Deckschicht enthalten ist.

11. Polyesterfolie nach Anspruch 6, **dadurch gekennzeichnet, daß** das Flammschutzmittel in der Deckschicht in einer Menge von 0,5 Gew.-% bis 30 Gew.-% (bezogen auf das Gewicht der Deckschicht) enthalten ist.

12. Polyesterfolie nach einem der Ansprüche 1 bis 11, **dadurch gekennzeichnet, daß** sie Rezyklat enthält.

13. Polyesterfolie nach einem der Ansprüche 1 bis 12, **dadurch gekennzeichnet, daß** sie einen Oberflächenglanz, gemessen nach DIN 67530 (Messwinkel 20°), von größer als 15 aufweist.

**14.** Polyesterfolie nach einem derAnsprüche 1 bis 13, **dadurch gekennzeichnet, daß** sie eine Lichttransmission L, gemessen nach ASTM D 1003, von mehr als 70% aufweist.

**15.** Polyesterfolie nach einem der Ansprüche 1 bis 14, **dadurch gekennzeichnet, daß** sie eine Trübung; gemessen nach ASTM D 1003, von weniger als 20% aufweist.

**16.** Verfahren zur Herstellung einer Polyesterfolie gemäß Anspruch 1, bei dem eine Polyesterschmelze einer Extrusionsdüse oder zwecks Herstellung einer Mehrschichtfolie Polyesterschmelzen entsprechend den Zusammensetzungen der Deck- und Basisschichten einer Mehrschichtdüse zugeführt werden, aus der Düse auf eine Abkühlwalze extrudiert werden und die so erhaltene Vorfolie anschließend biaxial verstreckt und hitzefixiert wird, wobei der Polyester mindestens ein Weißpigment und mindestens ein Flammschutzmittel enthält, welches im Polyester löslich ist und über die Masterbatch-Technologie direkt bei der Folienherstellung zudosiert wird und wobei das Masterbatch durch gradielles Erhitzen unter reduziertem Druck und unter Rühren vorbehandelt wurde.

**17.** Verwendung einer Folie nach Anspruch 1 als Innenraumverkleidung, als Display, für Schilder, für Schutzverglasungen, im Beleuchtungssektor, im Laden- und Regalbau, als Werbeartikel, Kaschiermedium, für Gewächshäuser, Überdachungen, Außenverkleidungen, Abdeckungen, im Bausektor, als Lichtwerbeprofil, Schattenmatte oder in Elektroanwendungen.

**Claims**

**1.** A white polyester film comprising at least one white pigment and at least one flame retardant, where the flame retardant is soluble in the polyester and is fed by way of masterbatch technology directly during production of the film, and where the masterbatch is pretreated by gradual heating at subatmospheric pressure, with agitation.

**2.** The polyester film as claimed in claim 1, wherein the gradual heating at subatmospheric pressure, with agitation, is directly followed by post-drying at a constant elevated temperature, likewise at subatmospheric pressure.

**3.** The polyester film as claimed in claim 1 or 2, wherein the white pigment is selected from one or more members of the group consisting of titanium dioxide, barium sulfate, calcium carbonate, kaolin and silicon dioxide.

**4.** The polyester film as claimed in claim 3, wherein the white pigment has been coated.

**5.** The polyester film as claimed in any of claims 1 to 4, wherein the flame retardant is selected from one or more organic phosphorus compounds, preferably dimethyl methylphosphonate.

**6.** The polyester film as claimed in one or more of claims 1 to 5, wherein from 0.5 to 30.0% by weight of flame retardant is present in the film.

**7.** The polyester film as claimed in any of claims 1 to 6, wherein from 0.2 to 40.0% by weight of white pigment is present in the film.

**8.** The polyester film as claimed in any of claims 1 to 7, wherein the film does not become brittle after 100 hours of heating at 100°C.

**9.** The polyester film as claimed in any of claims 1 to 8, wherein the film has more than one layer and comprises a base layer and at least one outer layer.

**10.** The polyester film as claimed in claim 9, wherein the flame retardant is present in the outer layer.

**11.** The polyester film as claimed in claim 6, wherein the amount of flame retardant present in the outer layer is from 0.5 to 30% by weight (based on the weight of the outer layer).

**12.** The polyester film as claimed in any of claims 1 to 11, wherein recycled material is present in the film.

**13.** The polyester film as claimed in any of claims 1 to 12, wherein the surface gloss of the film, measured to DIN 67530 (measurement angle 20°), is above 15.

**14.** The polyester film as claimed in any of claims 1 to 13, wherein the luminous transmittance L of the film, measured to ASTM-D 1003, is above 70%.

**15.** The polyester film as claimed in any of claims 1 to 14, wherein the haze of the film, measured to ASTM-D 1003, is below 20%.

**16.** A process for producing a polyester film as claimed in claim 1, in which a polyester melt is fed to an extrusion die or, to produce a film having more than one layer, polyester melts corresponding to the compositions of the outer and base layers are fed to a coextrusion die, and extruded from the die onto a chill roll, and the resultant prefilm is then biaxially oriented and heat-set, where the polyester comprises at least one white pigment and at least one flame retardant which is soluble in the polyester and is fed by way of masterbatch technology directly during production of the film, and where the masterbatch was pretreated by gradual heating at subatmospheric pressure, with agitation.

**17.** The use of a film as claimed in claim 1 as interior decoration, as display, for placards, for protective glazing, in the lighting sector, in the fitting-out of shops or stores, as a promotional requisite or a laminating medium, for greenhouses, roofing systems, exterior cladding, protective coverings, in the construction sector, as an illuminated advertising profile or blind, or in electrical applications.

**Revendications**

**1.** Film de polyester blanc contenant au moins un pigment blanc et au moins un agent ignifuge, l'agent ignifuge étant soluble dans le polyester et étant ajouté directement par addition dosée, au moyen de la technique de mélange-maître (*masterbatch*) lors de la fabrication du film et le mélange-maître ayant été prétraité par chauffage graduel sous pression réduite et sous agitation.

**2.** Film de polyester selon la revendication 1, **caractérisé en ce que** le chauffage graduel sous pression réduite et sous agitation est immédiatement suivi d'un post-séchage à température élevée et constante, également sous pression réduite.

**3.** Film de polyester selon la revendication 1 ou 2, **caractérisé en ce que** le pigment blanc est choisi parmi un ou plusieurs des éléments du groupe : dioxyde de titane, sulfate de baryum, carbonate de calcium, kaolin et dioxyde de silicium.

**4.** Film de polyester selon la revendication 3, **caractérisé en ce que** le pigment blanc est enrobé.

**5.** Film de polyester selon l'une quelconque des revendications 1 à 4, **caractérisé en ce que** l'agent ignifuge est choisi parmi un ou plusieurs composés phosphorés organiques, le méthylphosphonate de diméthyle étant préféré.

**6.** Film de polyester selon l'une quelconque des revendications 1 à 5, **caractérisé en ce que** le film contient de 0,5 à 30,0 % en poids d'agent ignifuge.

**7.** Film de polyester selon l'une quelconque des revendications 1 à 6, **caractérisé en ce que** le film contient de 0,2 à 40,0 % en poids de pigment blanc.

**8.** Film de polyester selon l'une quelconque des revendications 1 à 7, **caractérisé en ce que** le film ne présente aucune fragilisation après 100 heures de traitement thermique à 100°C.

**9.** Film de polyester selon l'une quelconque des revendications 1 à 8, **caractérisé en ce que** le film est un film multicouche comprenant une couche de base et au moins une couche de recouvrement.

**10.** Film de polyester selon la revendication 9, **caractérisé en ce que** l'agent ignifuge est contenu dans la couche de recouvrement.

**11.** Film de polyester selon la revendication 6, **caractérisé en ce que** l'agent ignifuge est contenu dans la couche de recouvrement en une proportion de 0,5 % en poids à 30 % en poids (par rapport au poids de la couche de recouvrement).

**12.** Film de polyester selon l'une quelconque des revendications 1 à 11, **caractérisé en ce qu'**il contient un produit recyclé.

**13.** Film de polyester selon l'une quelconque des revendications 1 à 12, **caractérisé en ce qu'**il présente une brillance superficielle, mesurée selon DIN 67530 (angle de mesure 20°) supérieure à 15.

**14.** Film de polyester selon l'une quelconque des revendications 1 à 13, **caractérisé en ce qu'**il présente une transmission de la lumière L, mesurée selon ASTM D 1003, de plus de à 70 %.

**15.** Film de polyester selon l'une quelconque des revendications 1 à 14, **caractérisé en ce qu'**il présente une opacité, mesurée selon ASTM D 1003, de moins de à 20 %.

**16.** Procédé pour la fabrication d'un film de polyester selon la revendication 1, dans lequel une masse fondue de polyester est envoyée à une filière d'extrusion ou, pour la production d'un film multicouche, des masses fondues de polyester correspondant aux compositions des couches de base et de recouvrement sont envoyées à une filière multicouche, celle(s)-ci est(sont) extrudée(s) à la sortie de la filière sur un cylindre refroidisseur et le pré-film ainsi obtenu est ensuite étiré biaxialement et thermofixé, le polyester contenant au moins un pigment blanc et au moins un agent ignifuge qui est soluble dans le polyester et est ajouté par addition dosée, au moyen de la technique de mélange-maître (*masterbatch*) directement lors de la fabrication du film et le mélange-maître ayant été prétraité par chauffage graduel sous pression réduite et sous agitation.

**17.** Utilisation d'un film selon la revendication 1, comme revêtement d'intérieur, comme afficheur, pour des panneaux, pour des vitrages de protection, dans le secteur de l'éclairage, dans la construction de magasins et d'étagères, comme article publicitaire, matériau de contre-collage, pour des serres, des toitures, des revêtements d'extérieur, des couvertures, dans le secteur du bâtiment, comme profilé pour publicité lumineuse, mat d'ombrage ou dans des applications électriques.